# DEMANDE DE BREVET EUROPEEN

(11) **EP 1 170 260 A1**
(43) Date de publication de la demande: **09.01.2002**
(21) Numéro de dépôt: 01440214.3
(22) Date de dépôt: 06.07.2001
(51) Int. Cl.: C02F 3/00, C02F 3/02

(54) **Procécé et installation de traitement d'effluents chargés en matières organiques**

(30) Priorité: 07.07.2000 FR 0008929
(71) Demandeur: VASLIN BUCHER (S.A.), 49290 Chalonnes sur Loire (FR)
(72) Inventeur: Bonnet, Jean, 49100 Angers (FR)
(74) Mandataire: Nuss, Pierre

(57) **Abrégé**

La présente invention concerne un procédé de traitement automatique ou semi-automatique d'effluents ou d'eaux usées, notamment d'effluents chargés en matières organiques tels que les effluents vinicoles consistant en fonctionnement normal, à collecter les effluents à traiter au fur et à mesure de leur production et à les transférer dans un contenant de stockage adapté, à pré-traiter lesdits effluents stockés par aération, et le cas échéant brassage, à clarifier l'effluent prétraité et à réaliser un traitement de finition de cet effluent avant déversement dans le milieu naturel ou réutilisation.

Procédé caractérisé en ce qu'il consiste à réaliser, avec des moyens (4) adaptés, une filtration intermédiaire des effluents prélevés dans le contenant de stockage (2), avant leur traitement de finition, en fonction du niveau de remplissage dudit contenant de stockage (2), par exemple sous forme de cuve ou de bac, et, le cas échéant, du taux de pollution résiduel des effluents prélevés dans ce dernier.

## Description

La présente invention concerne le domaine de la protection de l'environnement et du traitement des déchets, plus particulièrement les déchets sous forme d'effluents plus ou moins liquides et chargés en matières organiques, et a pour objet un procédé et une installation de traitement d'effluents ou d'eaux usées, plus particulièrement les effluents vinicoles produits par une cave, une coopérative ou un chai.

Parmi les différentes solutions proposées et mises en oeuvre actuellement pour réaliser les traitements de dépollution précités, on connaît notamment les procédés et dispositifs de traitement des effluents domestiques, agricoles ou industriels par stockage aéré.

Dans ces procédés, la pollution carbonée est dégradée en gaz carbonique et boues plus ou moins minéralisées par l'action d'une biomasse adaptée.

Le brevet d'invention français n° 97 07547 (FR-A-2 764 595), dont la demanderesse est copropriétaire, décrit, en particulier, un procédé principalement adapté à la dépollution des effluents produits par les caves vinicoles.

La production de ces effluents est cyclique : vendanges, soutirages, filtrations, opérations de nettoyage, ...

La périodicité de ces cycles est annuelle. Le volume de stockage nécessaire pour les effluents correspond habituellement au volume annuel de vin produit par la cave concernée.

Généralement, les procédés connus de dépollution par stockage aéré mettent en oeuvre quatre phases successives :
1. Pré-traitement par aération du stockage (dépollution biologique)
2. Clarification de l'effluent prétraité par décantation (séparation liquide / boue)
3. Traitement de finition des effluents clarifiés (filtres à sable, tranchées d'infiltration, ...)
4. Traitement des boues (minéralisation, épaississement,...)

Dans l'enchaînement des phases, l'étape la plus critique concerne le passage de la phase 1 à la phase 2. En début de phase 1, l'effluent prétraité a une mauvaise décantabilité. L'utilisateur doit donc vérifier que la décantabilité de l'effluent est bonne avant de passer en phase 2. Cette vérification est contraignante. Elle est difficilement automatisable. Cela conduit souvent l'utilisateur à prolonger inutilement la phase 1 et à prévoir une sécurité importante pour le volume du stockage (surdimensionnement).

Par ailleurs, l'homme du métier connaît des techniques pour clarifier des effluents peu décantables, dont certaines sont très efficaces, par exemple la micro-filtration. Néanmoins, leurs mises en oeuvre par des procédés automatisés comportent de nombreuses difficultés.

Ainsi, la micro-filtration présente des risques importants de colmatage / bouchage des organes de filtration utilisés par les matières organiques retenues et nécessite des cycles de lavage / régénération desdits organes qui sont très contraignants pour l'utilisateur : fréquence, technicité, contrôle de l'efficacité, ... D'autre part, cette technique impose un débit de filtration / clarification relativement constant ce qui semble en contradiction avec les pointes périodiques de production des effluents, notamment dans les applications vinicoles.

Le problème posé à la présente invention consiste à améliorer le procédé et l'installation décrits dans le document FR-A-2 764 595, de manière à pouvoir :
- clarifier automatiquement les effluents prétraités, sans contrainte pour l'utilisateur, avec un degré de dépollution constant dans une large plage de débits de production d'effluents ;
- diminuer de façon significative le volume du stockage, tout en conservant un volume de sécurité suffisant pour absorber les pointes de production d'effluent ;
- concevoir éventuellement des stations ou installations de traitement totalement autonomes ne nécessitant qu'une simple surveillance pour l'utilisateur ;
- obtenir un abattement important de la pollution des effluents bruts - mesurée par exemple par la Demande Chimique en Oxygène - avant rejet dans le milieu naturel, en accord avec les normes anti-pollution les plus sévères, notamment supérieur à 95 %.

A cet effet, la présente invention a pour principal objet un procédé de traitement automatique ou semi-automatique d'effluents ou d'eaux usées, notamment d'effluents chargés en matières organiques ou biologiques tels que les effluents vinicoles, consistant essentiellement, en fonctionnement normal, à collecter les effluents à traiter au fur et à mesure de leur production et à les transférer dans un contenant de stockage adapté, à pré-traiter lesdits effluents stockés par aération, et le cas échéant brassage, à clarifier l'effluent prétraité et à réaliser un traitement de finition de cet effluent avant déversement dans le milieu naturel ou réutilisation, caractérisé en ce qu'il consiste à réaliser, avec des moyens adaptés, une filtration intermédiaire des effluents prélevés dans le contenant de stockage en vue de leur clarification avant leur traitement de finition, en fonction du niveau de remplissage dudit contenant de stockage, par exemple sous forme de cuve ou de bac, et, le cas échéant, du taux de pollution résiduel des effluents prélevés dans ce dernier.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une représentation schématique en élévation latérale d'une installation ou station pour la mise en oeuvre du procédé selon l'invention ;
la figure 2 est une représentation schématique de l'installation ou de la station de la figure 1 vue de dessus ;
la figure 3 est une représentation schématique de détail de la cuve ou bac, des moyens de filtration et du bac intermédiaire faisant partie de l'installation représentée sur les figures 1 et 2, selon une variante de réalisation de l'invention, et,
la figure 4 est une représentation partielle d'une autre variante de réalisation de l'invention, intégrant une cuve de délestage.

L'invention porte, en premier lieu, sur un procédé de traitement automatique ou semi-automatique d'effluents ou d'eaux usées, notamment d'effluents chargés en matières organiques ou biologiques tels que les effluents vinicoles, consistant essentiellement, en fonctionnement normal, à collecter les effluents à traiter au fur et à mesure de leur production et à les transférer dans un contenant de stockage 2 adapté, à pré-traiter lesdits effluents stockés par aération, et le cas échéant brassage, à clarifier l'effluent prétraité et à réaliser un traitement de finition de cet effluent avant déversement dans le milieu naturel ou réutilisation.

Conformément à l'invention, ce procédé consiste en outre à réaliser, avec des moyens 4 adaptés, une filtration intermédiaire des effluents prélevés dans le contenant de stockage 2, avant leur traitement de finition, en fonction du niveau de remplissage N dudit contenant de stockage 2, par exemple sous forme de cuve ou de bac, et, le cas échéant, du taux de pollution résiduel des effluents prélevés dans ce dernier, préférentiellement estimé par la vitesse de consommation de l'oxygène dans ledit effluent. La teneur en oxygène dissous des effluents étant mesurée en continu à l'aide, par exemple, d'un oxymètre, capteur industriel bien connu de l'homme du métier.

Il s'agit par conséquent d'une filtration intermédiaire qui n'est mise en oeuvre que dans certaines conditions déterminées par les volumes d'effluents à traiter, leur durée maximale possible de résidence dans le contenant 2 et le degré de contamination organique des effluents stockés ou prélevés dans ledit contenant 2.

Avantageusement, le contenant 2 est utilisé comme réservoir tampon et la filtration intermédiaire est réalisée obligatoirement lorsque le niveau de remplissage N de la cuve de stockage 2 dépasse une valeur seuil supérieure N2 et est autorisée lorsque le niveau de remplissage N de la cuve de stockage 2 est situé entre une valeur seuil inférieure N1 et ladite valeur seuil supérieure N2 et que simultanément le taux de pollution résiduel est inférieur à une valeur seuil maximale prédéterminée, fonction notamment des capacités de dépollution des moyens 3 de traitement de finition.

Selon un mode de réalisation préféré de l'invention, la filtration intermédiaire conditionnelle consiste en une filtration tangentielle, préférentiellement par des moyens de filtration 4 sous forme de membranes tubulaires micro-poreuses regroupées dans au moins un module de filtrage 4', et s'effectue en écoulement diphasique par injection d'air, préférentiellement de manière périodique, à l'entrée ou l'une des entrées 4" dudit module de filtration 4'.

Toutefois, d'autres modes de filtration adaptés aux effluents pourront également trouver application dans le cadre de l'invention.

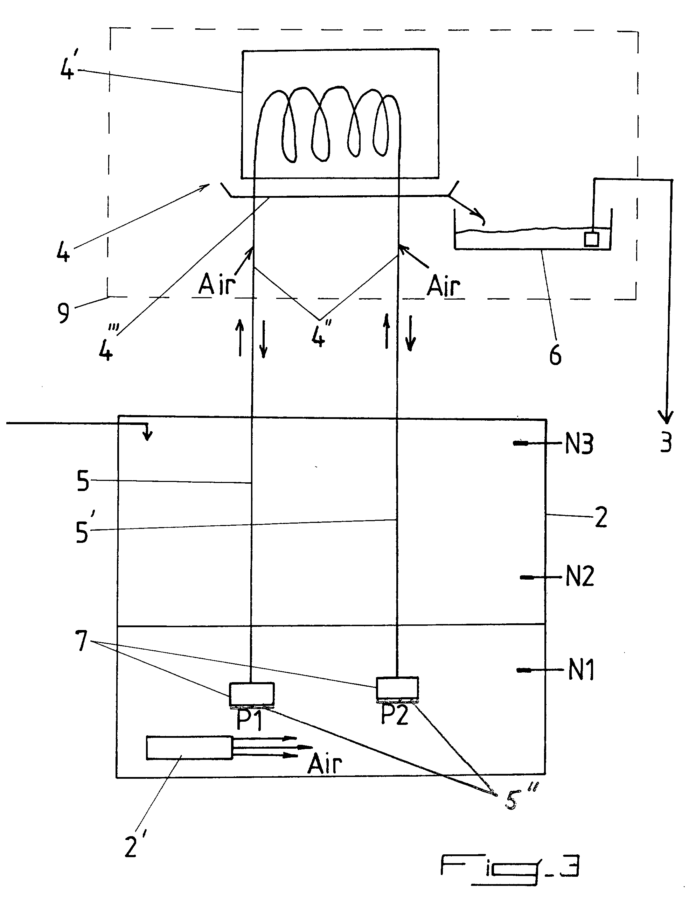

Conformément à une caractéristique de l'invention, représentée plus particulièrement sur la figure 3, les moyens 4 de filtration intermédiaire, regroupés dans un module 4' correspondant, sont reliés à la cuve de stockage 2 par deux voies 5, 5' de circulation et d'acheminement des effluents, fonctionnant de manière alternative et amenant lesdits effluents aux deux extrémités 4" dudit module 4', résultant le cas échéant en des écoulements inverses sur au moins une partie du trajet de circulation dans ce dernier et pouvant aboutir à une réinjection au moins partielle des effluents prélevés par l'intermédiaire d'une première voie 5 ou 5' vers la cuve de stockage 2 à travers la seconde voie d'acheminement 5' ou 5.

Il est ainsi possible d'assurer éventuellement une filtration quasi-permanente (et donc un prélèvement quasi-permanent), non tributaire d'un éventuel bouchage d'une voie d'acheminement, l'alternance d'utilisation de chacune des voies entraînant un dégagement de la voie et de l'ouverture d'aspiration non utilisées (par le reflux partiel) et une action de nettoyage des éléments filtrants (par le flux inversé), permettant d'espacer les phases de rinçage.

Le prélèvement dans la cuve de stockage 2 des effluents est effectué à un niveau correspondant sensiblement à la valeur seuil de remplissage inférieure N1 et les effluents filtrés sont reçus dans un contenant de stockage intermédiaire 6, avant leur déversement contrôlé sur un ou plusieurs massifs filtrants 3, enterrés ou non, formant les moyens le traitement de finition.

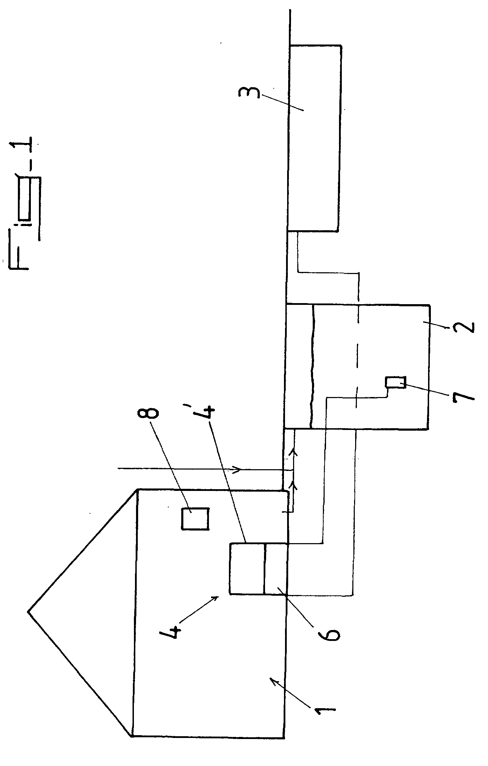

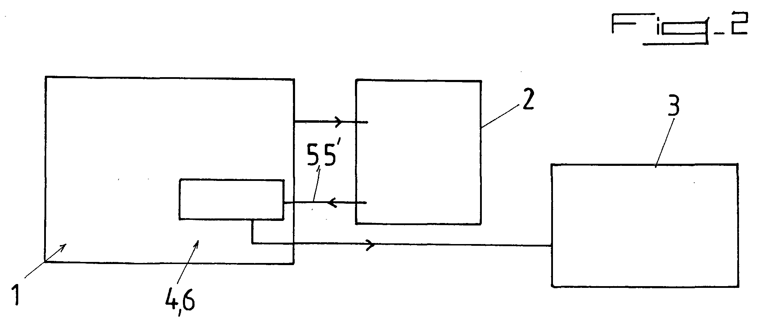

La présente invention a également pour objet, comme le montrent les figures 1 à 3 des dessins annexés, une installation ou station de traitement automatique d'effluents ou d'eaux usées, pour la mise en oeuvre du procédé décrit ci-dessus, essentiellement constituée par un contenant ou une cuve de stockage 2 recevant les effluents au fur et à mesure de leur production et comportant des moyens d'aération contrôlée 2' et/ou de brassage de son contenu (non représenté), des moyens 3 de traitement de finition des effluents prétraités et clarifiés prélevés dans ladite cuve de stockage 2, des moyens 5, 5', 7 de prélèvement et d'acheminement des effluents prétraités et des moyens capteurs associés à une unité 8 de contrôle et de gestion du fonctionnement de l'installation.

Selon l'invention, cette installation comporte également des moyens 4 de filtration active situés fonctionnellement entre la cuve de stockage 2 et les moyens de traitement de finition 3, alimentés en effluents prélevés dans la cuve de stockage 2 et déversés après filtration sur les moyens de traitement de finition 3, ladite filtration active étant, d'une part, réalisée obligatoirement lorsque le niveau de remplissage N de la cuve de stockage 2 dépasse une valeur seuil supérieure N2 et, d'autre part, autorisée lorsque le niveau de remplissage N de la cuve de stockage 2 est situé entre une valeur seuil inférieure N1 et ladite valeur seuil supérieure N2 et que simultanément le taux de pollution résiduel est inférieur à une valeur seuil maximale prédéterminée, fonction notamment des capacités de dépollution des moyens 3 de traitement de finition, ledit taux étant estimé par la vitesse de consommation de l'oxygène dans les effluents stockés.

Les effluents produits par le site 1, par exemple une cave, sont donc transférés vers une cuve de stockage 2, éventuellement enterrée et dont le volume intérieur peut être relativement petit.

Dans une application de traitement d'effluents vinicoles, le volume de ladite cuve de stockage 2, préférentiellement au moins partiellement enterrée, correspond avantageusement à environ 10 à 20 %, préférentiellement 15 %, du volume d'effluents produit en un an par ledit site 1, la valeur seuil de remplissage inférieure N1 correspondant à environ 25 à 40 %, préférentiellement environ 33 %, du volume de ladite cuve de stockage 2 et la valeur seuil de remplissage supérieure N2 correspondant à environ 40 % à 60 %, préférentiellement environ 50 %, du volume de ladite cuve de stockage 2.

La cuve 2 est équipée de moyens d'aération et de brassage classiques, par exemple du type aérateur submersible ou diffuseurs à membranes, et de mesure du taux d'oxygène dissous dans l'effluent stocké, par exemple en utilisant un oxymètre associé à un transmetteur.

Une boucle d'asservissement classique éventuellement gérée par l'unité 8, entre les moyens d'aération et la mesure de l'oxygène dissous, permettra de maintenir le taux d'oxygène dissous entre deux valeurs, par exemple entre 0,5 et 2 mg d'oxygène par litre d'effluent. Cette oxygénation permanente des effluents donne une grande réactivité à la station et est très favorable à une minéralisation rapide des boues.

Compte tenu de la nature des effluents à traiter, les moyens 4 de filtration active raccordés à la cuve 2 comprennent un module 4' de filtration tangentielle renfermant des membranes tubulaires micro-poreuses, la filtration s'effectuant par écoulement diphasique et le prélèvement des effluents dans la cuve de stockage 2 étant réalisé à un niveau correspondant sensiblement à la valeur seuil inférieure N1 de remplissage, ou à un niveau légèrement inférieur.

Le type de filtration précité est connu de l'homme du métier et, dans un exemple de réalisation applicable à l'invention, la porosité des membranes est comprise entre 0,05 et 0,2 micromètre, le diamètre des tubes filtrants est compris entre 4 et 10 mm, et la vitesse de circulation dans ces tubes est comprise entre 1 et 3 m/s.

Pour prévenir un colmatage très rapide de l'ensemble de filtration, il est avantageux de prévoir un décolmatage permanent des éléments filtrants ainsi que des zones d'aspiration des effluents dans la cuve 2.

Le décolmatage des éléments filtrants utilise la technique connue de l'écoulement diphasique en injectant périodiquement ou continûment de l'air à l'entrée des membranes de façon à obtenir dans les membranes tubulaires un rapport des volumes liquide / air compris entre 1 et 2.

Pour pouvoir assurer une circulation des effluents dans les moyens de filtration 4 et pouvoir décolmater dès que nécessaire les zones d'aspiration dans la cuve de stockage 2, l'installation comporte deux voies ou lignes de circulation 5 et 5' distinctes pour le prélèvement des effluents et leur acheminement vers les moyens 4 de filtration intermédiaire, comportant chacune une ouverture d'aspiration 5" propre, reliées à des extrémités opposées desdits moyens 4 de filtration active et comprenant chacune un organe de transfert 7 du type pompe ou un organe de transfert commun pouvant être alternativement intégré dans l'une ou l'autre des deux lignes ou voies de circulation 5 et 5' parallèles.

On peut ainsi utiliser deux pompes 7 identiques immergées dans la cuve 2, chaque pompe étant raccordée à une des extrémités des éléments filtrants des moyens 4 (Fig. 3). Lorsqu'une pompe fonctionne, elle décolmate la crépine d'aspiration de l'autre pompe. Il suffit donc d'inverser périodiquement la commande des pompes pour obtenir un décolmatage régulier des zones d'aspirations.

Le couple pompe 7 / éléments filtrants 4 est déterminé de façon à obtenir la vitesse de circulation et la pression requises dans les éléments filtrants.

Le débit moyen de filtration doit sensiblement correspondre au débit moyen de production des effluents pendant les périodes de forte activité.

L'installation comprend également, de manière avantageuse, un contenant de stockage intermédiaire 6, destiné à collecter les effluents filtrés à la sortie des moyens de filtration 4 et associé à des moyens de transfert contrôlé desdits effluents filtrés vers lesdits moyens de traitement de finition 3, par exemple sous la forme d'un ou de plusieurs massifs de sable ou analogue (tranchée d'infiltration ou tertre filtrant).

Comme le montre la figure 3 des dessins annexés, les moyens de filtration 4 peuvent, par exemple, consister en une membrane tubulaire, longue de plusieurs mètres et du type mentionné ci-dessus, enroulée en serpentin et dans laquelle les effluents prélevés sont injectés sous pression par l'une de ses deux ouvertures d'extrémité (correspondant aux entrées opposées 4" du module 4'), l'effluent non filtré retournant dans la cuve de stockage 2.

L'effluent filtré, après avoir traversé la paroi membranaire, s'accumule en gouttes sur la face extérieure de ladite paroi (du côté de l'injection) et tombe sous l'effet de la pesanteur dans un plateau collecteur 4"' s'étendant sous ledit serpentin.

L'effluent filtré et collecté s'écoule dans le bac de stockage intermédiaire 6 à partir duquel il est envoyé vers les moyens de traitement de finition 3, par exemple par une pompe aspirante immergée associée à un organe de mesure.

Les différents éléments 4, 4', 4"' et 6 précités pourront, par exemple, être montés ensemble dans un caisson ou un bâti support 9.

Le volume du contenant intermédiaire 6 ou bac étant connu, la fréquence des vidanges du bac permet de calculer le débit de filtration. Lorsque le débit de filtration a baissé de façon significative, par exemple plus de 50 %, l'unité 8, par exemple un automate, qui pilote l'installation peut commander un rinçage automatique, à l'eau chaude, des éléments filtrants des moyens 4.

Lorsque le rinçage ne permet plus de retrouver les performances initiales des éléments filtrants, un lavage chimique sera effectué. Grâce à l'efficacité des décolmatages et des rinçages, la fréquence des lavages est petite, environ huit lavages par an. Les cycles de lavages peuvent également être totalement automatisés.

La cuve de stockage 2 est équipée, en plus des moyens d'aération contrôlés 2' et de brassage (non représenté), de différents détecteurs de niveaux pour déterminer le niveau de remplissage de cette dernière.

N1 correspond au niveau minimum des effluents dans la cuve 2. Dans le volume correspondant, la biomasse se concentre et se minéralise progressivement. Ce volume permet de diluer les effluents bruts entrants et donne à la station ou installation une grande réactivité.

Préférentiellement, la valeur seuil inférieure de remplissage N1 de la cuve de stockage 2 correspond en volume à environ cinq jours de production d'effluents en période de forte activité du site de production 1 concerné, le volume correspondant à la valeur seuil supérieure de remplissage N2 étant supérieur d'environ 50 % audit volume correspondant à la valeur seuil inférieure de remplissage N1.

En fonctionnement normal, stabilisé, le niveau des effluents dans la cuve 2 est situé entre N1 et N2. La zone d'aspiration des pompes 7 est située légèrement en dessous de N1. Comme déjà indiqué, N1 correspond environ au tiers du volume de la cuve 2, N2 correspond environ à la moitié.

Selon l'invention, un niveau de sécurité N3 de remplissage de la cuve de stockage 2 est défini, à partir duquel une alarme est déclenchée, ledit niveau de sécurité N3 correspondant à environ 90 % de la contenance maximale de ladite cuve de stockage 2.

Le volume compris entre N2 et N3 correspond au volume de sécurité destiné à absorber les pointes de production d'effluents. Le volume correspondant à N3 doit être bien adapté aux risques de surproductions accidentelles. Les positions des niveaux N1 et N2, ne sont pas critiques, elles peuvent baisser de 10 à 20 % pour favoriser le volume de sécurité destiné à absorber les pointes de production d'effluent, ou augmenter de 10 à 20 % pour favoriser le stockage des boues.

La filtration est possible entre N1 et N2, au-dessus de N2 elle est obligatoire.

Entre N1 et N2, la filtration sera autorisée en fonction du niveau de pollution résiduel des effluents, estimé, par exemple, par la technique connue sous le nom de respiromètrie.

Cette technique permet d'estimer le taux de pollution des effluents en mesurant l'activité de la biomasse épuratrice par la vitesse de consommation de l'oxygène dissous dans l'effluent. Il suffit pour cela de mesurer la durée nécessaire pour que le taux d'oxygène dissous dans l'effluent passe, en l'absence d'aération, de la valeur maximale - par exemple 2 mg d'oxygène par litre - à la valeur minimale - par exemple 0,5 mg d'oxygène par litre. La mesure de cette durée est très facile à faire, elle correspond à la durée d'arrêt du système d'aération automatique de la cuve 2. Pour une pollution résiduelle de l'ordre de 1 g/l exprimée en DCO la durée nécessaire pour passer de la valeur maximum ci-dessus, 2 mg/l, à la valeur minimum, 0,5 mg/l, est de l'ordre de 16 mn pour une température de 12°C. Il est nécessaire d'effectuer une correction en fonction de la température de l'effluent : d = 20-0,3t
d = durée d'arrêt correspondant à une DCO égale à 1 g O2/1
t = température °C

Si la durée de l'arrêt est supérieure ou égale à d (t), la filtration est possible.

Si le niveau des effluents dans la cuve dépasse N2, la filtration est commandée obligatoirement. Cette situation correspond à une surproduction anormale d'effluents. L'installation doit être capable de stocker et d'absorber la pointe, même si la pollution résiduelle des effluents est supérieure à 1 g/l. Les moyens de traitement de finition, par exemple du type filtre à sable, absorbe facilement une surcharge accidentelle.

Si le niveau N3 est atteint, une alarme signale le fonctionnement anormal de la station. La position de N3 dans la cuve 2 devrait autoriser encore, au minimum, le stockage d'une journée normale de production d'effluent.

Lorsqu'en fin de filtration le niveau N1 est atteint, la filtration est arrêtée et un rinçage des membranes est effectué.

L'installation est pilotée, par exemple, par un automate programmable industriel. Toutes les fonctions : aération, filtration, rinçage/lavage du filtre, minéralisation des boues, contrôle des niveaux, sécurités, ... sont automatisées.

Grâce au procédé et à l'installation précités, il est possible de réaliser un traitement efficace d'effluents rejetés avec des débits très variables par l'intermédiaire d'une installation comprenant un unique réacteur (cuve de stockage 2 avec des moyens de prétraitement par aération et brassage) ayant un volume relativement faible, associé à un moyen de filtration dynamique, ladite filtration étant effectuée de manière contrôlée en fonction de la qualité et de la quantité d'effluents dans le réacteur précité.

Ce traitement de dépollution, qui s'effectue sans recyclage des boues, sans décantation et sans mise en oeuvre d'une biomasse fixée, est complétée par une phase terminale de déversement des effluents filtrés avec une teneur en DCO compatible sur un ou plusieurs massifs siliceux (massifs de sable).

La phase de filtration dynamique consiste en une filtration fine (ultra-filtration) sur membranes (0,1µm) avec des séquences de nettoyage automatisées et avec un effet tangentiel résultant de la vitesse de circulation des effluents par rapport auxdites membranes.

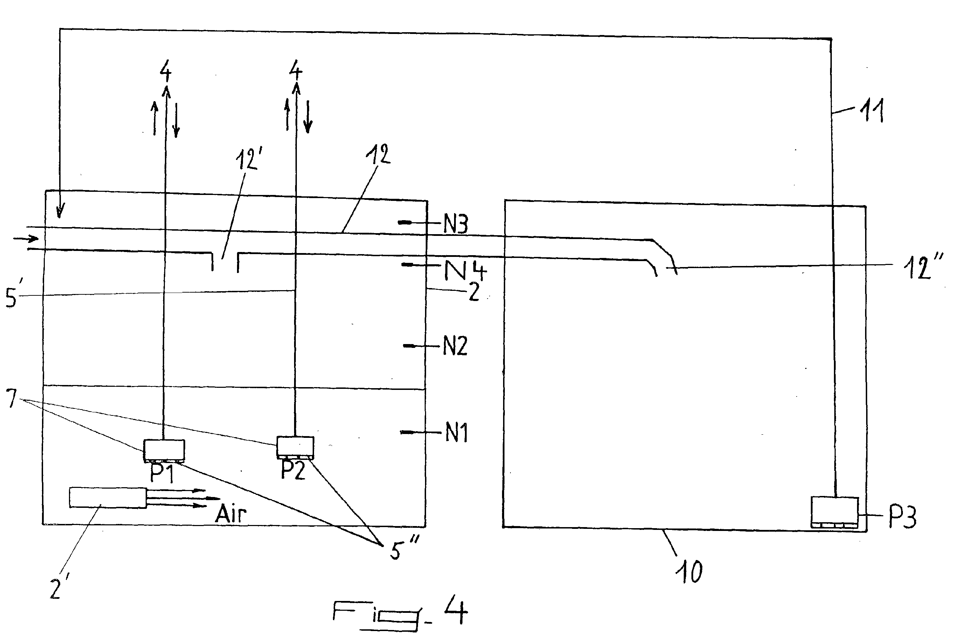

Dans les cas où le flux des effluents à traiter est susceptible de présenter occasionnellement des pointes générant des volumes supérieurs à la capacité d'absorption courante, voire supérieures au volume total de la cuve de stockage 2, il peut avantageusement être prévu, comme le montre la figure 4 des dessins annexés, que l'installation comprenne, en outre, une cuve supplémentaire de délestage 10 récupérant le flux d'effluents à traiter en lieu et place de la cuve de stockage 2 lorsque le remplissage de cette dernière atteint ou dépasse un niveau seuil prédéterminé, ladite cuve de délestage 10 étant équipée d'une ligne 11 de transfert des effluents vers la cuve de stockage 2, intégrant une pompe de refoulement P3 qui est activée lorsque le niveau de remplissage de ladite cuve de stockage 2 atteint ou chute en dessous d'une valeur seuil de remplissage N4.

Cette cuve de délestage 10 ne sera normalement pas munie de moyens de prétraitement des effluents.

Conformément à une caractéristique supplémentaire de l'invention, l'installation comporte avantageusement une unique conduite de déversement 12 pour l'alimentation en effluents des cuves de stockage 2 et de délestage 10 par le haut, ces dernières étant disposées dans l'ordre cuve de stockage 2 / cuve de délestage 10 dans le sens d'écoulement du flux dans ladite conduite 12 et cette dernière étant munie d'une première ouverture de déversement 12' débouchant dans la cuve de stockage 2 et d'une seconde ouverture de déversement 12" débouchant dans la cuve de délestage 10.

Ladite conduite de déversement 12 sera disposée sensiblement horizontalement, traversera la cuve de stockage 2 dans sa partie supérieure et comportera un premier embout de déversement correspondant à la première ouverture 12' et dirigé vers le fond de ladite cuve 2.

Ainsi, lorsque le niveau de remplissage de la cuve de stockage 2 atteint la conduite 12, le surplus d'effluents produits s'écoulera au-delà de ladite première ouverture 12' et sera automatiquement déversé dans la cuve de délestage 10.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de traitement automatique ou semi-automatique d'effluents ou d'eaux usées, notamment d'effluents chargés en matières organiques ou biologiques tels que les effluents vinicoles, consistant essentiellement, en fonctionnement normal, à collecter les effluents à traiter au fur et à mesure de leur production et à les transférer dans un contenant de stockage adapté, à pré-traiter lesdits effluents stockés par aération, et le cas échéant brassage, à clarifier l'effluent prétraité et à réaliser un traitement de finition de cet effluent avant déversement dans le milieu naturel ou réutilisation, **caractérisé en ce qu'**il consiste à réaliser, avec des moyens (4) adaptés, une filtration intermédiaire des effluents prélevés dans le contenant de stockage (2), avant leur traitement de finition, en fonction du niveau de remplissage (N) dudit contenant de stockage (2), par exemple sous forme de cuve ou de bac, et, le cas échéant, du taux de pollution résiduel des effluents prélevés dans ce dernier, préférentiellement estimé par la vitesse de consommation de l'oxygène dans ledit effluent.

2. Procédé selon la revendication 1, **caractérisé en ce que** la filtration intermédiaire est réalisée obligatoirement lorsque le niveau de remplissage (N) de la cuve de stockage (2) dépasse une valeur seuil supérieure (N2) et est autorisée lorsque le niveau de remplissage (N) de la cuve de stockage (2) est situé entre une valeur seuil inférieure (N1) et ladite valeur seuil supérieure (N2) et que simultanément le taux de pollution résiduel est inférieur à une valeur seuil maximale prédéterminée, fonction notamment des capacités de dépollution des moyens (3) de traitement de finition.

3. Procédé selon l'une quelconque des revendications 1 et 2, **caractérisé en ce que** la filtration intermédiaire conditionnelle consiste en une filtration tangentielle, préférentiellement par des moyens de filtration (4) sous forme de membranes tubulaires micro-poreuses regroupées dans au moins un module de filtrage (4'), et s'effectue en écoulement diphasique par injection d'air, préférentiellement de manière périodique, à l'entrée ou l'une des entrées (4") dudit module de filtration (4').

4. Procédé selon l'une quelconque des revendications 1 à 3, **caractérisé en ce que** les moyens (4) de filtration intermédiaire, regroupés dans un module (4') correspondant, sont reliés à la cuve de stockage (2) par deux voies (5, 5') de circulation et d'acheminement des effluents, fonctionnant de manière alternative et amenant lesdits effluents aux deux extrémités (4") dudit module (4'), résultant le cas échéant en des écoulements inverses sur au moins une partie du trajet de circulation dans ce dernier et pouvant aboutir à une réinjection au moins partielle des effluents prélevés par l'intermédiaire d'une première voie (5 ou 5') vers la cuve de stockage (2) à travers la seconde voie d'acheminement (5' ou 5).

5. Procédé selon l'une quelconque des revendications 2 à 4, **caractérisé en ce que** le prélèvement dans la cuve de stockage (2) des effluents est effectué à un niveau correspondant sensiblement à la valeur seuil de remplissage inférieure (N1) et **en ce que** les effluents filtrés sont reçus dans un contenant de stockage intermédiaire (6), avant leur déversement contrôlé sur un ou plusieurs massifs filtrants (3), enterrés ou non, formant les moyens le traitement de finition.

6. Installation ou station de traitement automatique d'effluents ou d'eaux usées, pour la mise en oeuvre du procédé selon l'une quelconque des revendications 1 à 5, essentiellement constituée par un contenant ou cuve de stockage recevant les effluents au fur et à mesure de leur production et comportant des moyens d'aération contrôlée et/ou de brassage de son contenu, des moyens de traitement de finition des effluents prétraités et clarifiés prélevés dans ladite cuve de stockage, des moyens de prélèvement et d'acheminement des effluents prétraités et des moyens capteurs associés à une unité de contrôle et de gestion du fonctionnement de l'installation, **caractérisée en ce qu'**elle comporte également des moyens (4) de filtration active situés fonctionnellement entre la cuve de stockage (2) et les moyens de traitement de finition (3), alimentés en effluents prélevés dans la cuve de stockage (2) et déversés après filtration sur les moyens de traitement de finition (3), ladite filtration active étant, d'une part, réalisée obligatoirement lorsque le niveau de remplissage (N) de la cuve de stockage (2) dépasse une valeur seuil supérieure (N2) et, d'autre part, autorisée lorsque le niveau de remplissage (N) de la cuve de stockage (2) est situé entre une valeur seuil inférieure (N1) et ladite valeur seuil supérieure (N2) et que simultanément le taux de pollution résiduel est inférieur à une valeur seuil maximale prédéterminée, fonction notamment des capacités de dépollution des moyens (3) de traitement de finition, ledit taux étant préférentiellement estimé par la vitesse de consommation de l'oxygène dans les effluents stockés.

7. Installation selon la revendication 6, **caractérisée en ce que** les moyens (4) de filtration active comprenant un module (4') de filtration tangentielle renfermant des membranes tubulaires micro-poreuses, la filtration s'effectue par écoulement diphasique et le prélèvement des effluents dans la cuve de stockage (2) est réalisé à un niveau correspondant sensiblement à la valeur seuil inférieure (N1) de remplissage, ou à un niveau légèrement inférieur.

8. Installation selon l'une quelconque des revendications 6 et 7, **caractérisée en ce qu'**elle comporte deux voies ou lignes de circulation (5 et 5') distinctes pour le prélèvement des effluents et leur acheminement vers les moyens (4) de filtration intermédiaire, comportant chacune une ouverture d'aspiration (5") propre, reliées à des extrémités opposées desdits moyens (4) de filtration active et comprenant chacune un organe de transfert (7) du type pompe ou un organe de transfert commun pouvant être alternativement intégré dans l'une ou l'autre des deux lignes ou voies de circulation (5 et 5') parallèles.

9. Installation selon l'une quelconque des revendications 6 à 8, **caractérisée en ce que**, dans le cas de traitement d'effluents vinicoles d'un site de production de vin (1), le volume de la cuve de stockage (2), préférentiellement au moins partiellement enterrée, correspond à environ 10 à 20 %, préférentiellement 15 %, du volume d'effluent produit en un an par ledit site (1), la valeur seuil de remplissage inférieure (N1) correspondant à environ 25 à 40 %, préférentiellement environ 33 %, du volume de ladite cuve de stockage (2) et la valeur seuil de remplissage supérieure (N2) correspondant à environ 40 % à 60 %, préférentiellement environ 50 %, du volume de ladite cuve de stockage (2).

10. Installation selon l'une quelconque des revendications 6 à 9, **caractérisée en ce que** la valeur seuil inférieure de remplissage (N1) de la cuve de stockage (2) correspond en volume à environ cinq jours de production d'effluents en période de forte activité du site de production (1) concerné, le volume correspondant à la valeur seuil supérieure de remplissage (N2) étant supérieur d'environ 50 % audit volume correspondant à la valeur seuil inférieure de remplissage (N1).

11. Installation selon l'une quelconque des revendications 6 à 10, **caractérisée en ce qu'**elle comprend également un contenant de stockage intermédiaire (6), destiné à collecter les effluents filtrés à la sortie des moyens de filtration (4) et associé à des moyens de transfert contrôlé desdits effluents filtrés vers lesdits moyens de traitement de finition (3), par exemple sous la forme d'un ou de plusieurs massifs de sable ou analogue.

12. Installation selon l'une quelconque des revendications 6 à 11, **caractérisée en ce qu'**un niveau de sécurité (N3) de remplissage de la cuve de stockage (2) est défini, à partir duquel une alarme est déclenchée, ledit niveau de sécurité (N3) correspondant à environ 90 % de la contenance maximale de ladite cuve de stockage (2).

13. Installation selon l'une quelconque des revendications 6 à 11, **caractérisée en ce qu'**elle comprend, en outre, une cuve supplémentaire de délestage (10) récupérant le flux d'effluents à traiter en lieu et place de la cuve de stockage (2) lorsque le remplissage de cette dernière atteint ou dépasse un niveau seuil prédéterminé, ladite cuve de délestage (10) étant équipée d'une ligne (11) de transfert des effluents vers la cuve de stockage (2), intégrant une pompe de refoulement (P3) qui est activée lorsque le niveau de remplissage de ladite cuve de stockage (2) atteint ou chute en dessous d'une valeur seuil de remplissage (N4).

14. Installation selon la revendication 13, **caractérisée en ce qu'**elle comporte une unique conduite de déversement (12) pour l'alimentation en effluents des cuves de stockage (2) et de délestage (10) par le haut, ces dernières étant disposées dans l'ordre cuve de stockage (2) / cuve de délestage (10) dans le sens d'écoulement du flux dans ladite conduite (12) et cette dernière étant munie d'une première ouverture de déversement (12') débouchant dans la cuve de stockage (2) et d'une seconde ouverture de déversement (12") débouchant dans la cuve de délestage (10).
